# EUROPEAN PATENT APPLICATION

(11) **EP 2 512 096 A1**
(43) Date of publication of application: **17.10.2012**
(21) Application number: 12163694.8
(22) Date of filing: 11.04.2012
(51) Int. Cl.: H04L 29/06

(54) **File-based application programming interface providing selectable security features**

(30) Priority: 14.04.2011 US 201161475356 P; 11.11.2011 US 201113294336
(71) Applicant: Unisys Corporation, Blue Bell, PA 19422 (US)
(72) Inventor: Kain, Michael T, Collegeville, PA 19426 (US)
(74) Representative: Harrison Goddard Foote

(57) **Abstract**

A data communication security system is disclosed that includes a network interface including a first security module implementing a first security architecture, and a second security module implementing a second security architecture different from the first security architecture. The network interface further includes a file-based application programming interface defining a plurality of attributes of the network interface and including at least one attribute associated with data security managed by one of the first and second security modules. The file-based application programming interface includes at least one attribute from among the plurality of attributes that is associated with selecting between the first or second security modules.

## Description

### Technical Field

The present disclosure is related to a file-based application programming interface. In particular, the present disclosure relates to a file-based API providing selectable security features, which can be used at a communication interface.

### Background

A file-based application programming interface (API) can be used to expose access to hardware resources in a computing system or network of computing systems. Typically, such an API exposes the hardware resources and directs data transactions via file-based commands, such as open, close, read, and write operations. For example a file-based command can be directed toward a "port file" which is a file-based view of a communication port. Attributes are available for network resources in such file-based APIs, and can be specified through an attribute set retrievable using the API.

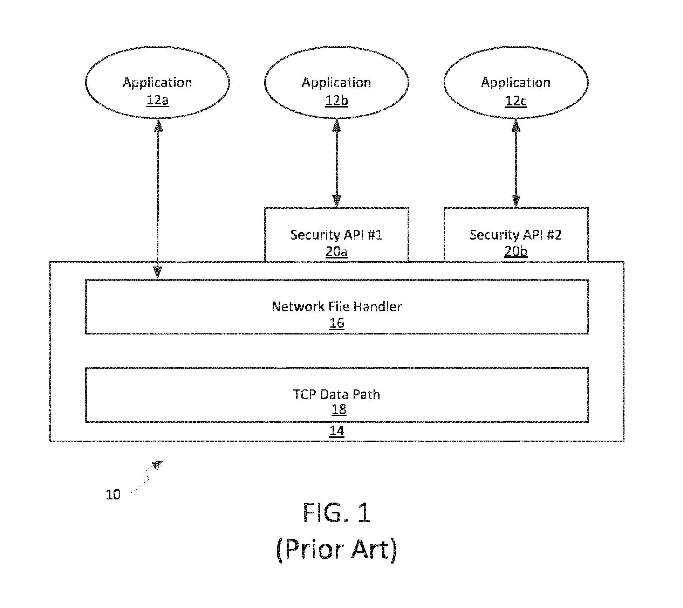

Various types of network security protocols are available for communications over networks such as the Internet. Example network security protocols include Transport Layer Security (TLS), Secure Sockets Layer (SSL), and Secure Shell (SSH). These network security protocols encrypt the segments of network connections at the Transport Layer end-to-end and for other services such as authentication and compression as well. These protocols are typically implemented on behalf of application layer protocols (such as HTTP, FTP, SMTP, and other protocols), by encapsulating the application specific protocols.Resources exposed via a file-based API, particularly network resources, can be secured by use of security modules operating on data in the transport layer (e.g., TCP) data path. However, file-based APIs have no way of allowing an application to use such security protocols above the current native service provided. In other words, if a file-based API is used in current systems to access a communications interface, any security features that are to be applied for communication are dictated within that communication interface, and are not exposed via the file-based API.Figure 1 illustrates an example of an existing communications architecture 10, in which security features can be exposed through use of an API. In this arrangement, a number of applications 12a-c are depicted, which are each operatively connected to a communication interface 14. The communication interface 14 can include a network file handler 16, which allows access to a data path, shown as TCP data path 18.

In a typical arrangement, the applications 12a-c operate on a computing system, and may or may not require secure communication using the communication interface 14. Accordingly, separate security APIs are provided for different security protocols used by different applications. In the example shown, a first application 12a is directly connected to the network file handler 16 for data communication, indicating that the first application 12a is not using any security features provided by the communication interface 14. A second application 12b is connected to the network file handler 16 (and data path 18) via a first security interface 20a that is provided at the communication interface. A third application 12b may use a different security protocol, and accordingly is connected to a separate security interface 20b. In this arrangement, where different applications (or the same application) wish to use different security protocols provided by a communication interface, the applications must access separate security interfaces.

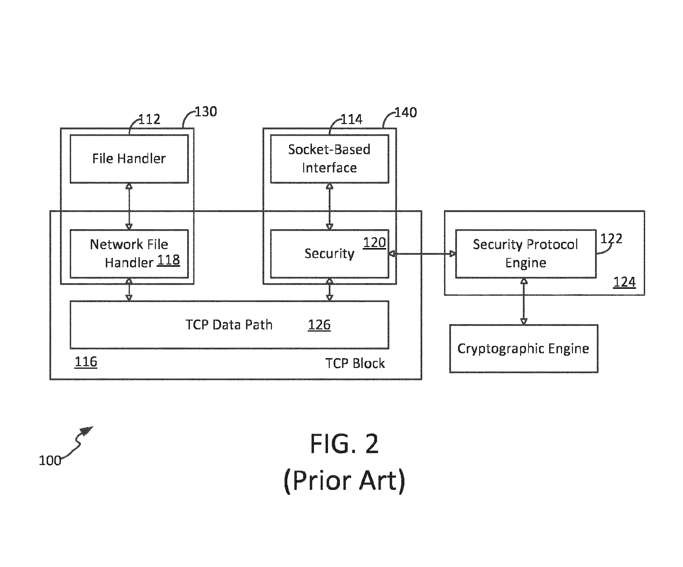

To illustrate this shortcoming in typical existing file-based API systems, an existing logical arrangement of a data communications interface 110 is shown in Figure 2. In that arrangement, a file-based interface 112 and a socket-based interface 114 are each interfaced with a TCP block 116. Within the TCP block 116, a network file handler 118 is logically connected to the file-based interface 112, and a security block 120 is logically connected to the socket handler 114. The security block 120 is interfaced to a security protocol engine 122 within a TCP/IP security block 124 which calls the cryptography API. Each of the security block 120 and the network file handler 118 are independently connected to a TCP data path 126.

In use, the file-based interface 112 directs logical I/O commands within TCP data path 126 via the network file handler 118 of TCP block 116. Similarly, socket-based interface 114 interfaces with security block 120 of the TCP/IP block 116 to transmit commands regarding native encryption included within the TCP block for use on the TCP data path 126. Notably, security is handled separately from the logical I/O operations within the TCP block 116, and is only accessible to socket-based interface 114, which is not accessible to a user via a file-based API 130 associated with the file-based interface 112. Rather, security within the TCP block 116 is typically only provided via a socket-based API 140, associated with the socket-based interface 114. Therefore, current designs do not provide access to security controls for logical I/O operations above the current native service provided, or in any event can only provide access to a single security service via each security interface.

For these and other reasons, improvements are desirable.

### Summary

In accordance with the following disclosure, the above and other issues are addressed by the following:
In a first aspect, a data communication security system is disclosed that includes a network interface including a first security module implementing a first security architecture, and a second security module implementing a second security architecture different from the first security architecture. The network interface further includes a file-based application programming interface defining a plurality of attributes of the network interface and including at least one attribute associated with data security managed by one of the first and second security modules. The file-based application programming interface includes at least one attribute from among the plurality of attributes that is associated with selecting between the first or second security modules. In additional aspects, more than two security modules and associated security architectures could be used.

In a second aspect, a method of securing data at a communication interface of a computing system is disclosed. The method includes receiving an open command at the communication interface, the open command included in a file-based application programming interface defining a plurality of attributes of the communication interface. At least one attribute from among the plurality of attributes defines a security protocol to be used, the security protocol selected from among a plurality of available security protocols. The method further includes setting at least one attribute associated with data encryption at the communication port, the at least one attribute used to select from among the plurality of available security protocols. The method further includes establishing a channel with a remote computing system from which the open command was received.

In a third aspect, a method of securing data at a communication interface of a computing system is disclosed. The method includes receiving a command at the communication interface to open a channel with a remote computing system, the command included in a file-based application programming interface defining a plurality of attributes of the communication interface. At least one attribute from among the plurality of attributes defines a security protocol to be used, with the security protocol selected from among a plurality of available security protocols. The method further includes setting at least one attribute associated with data encryption at the communication port, the at least one attribute used to select from among the plurality of available security protocols. The method also includes transmitting a request to open the channel to a remote computing system from which the open command was received.

### Brief Description of the Drawings

Figure 1 is a block diagram of a known data communications interface architecture;
Figure 2 is a block diagram of a prior art data communications interface;
Figure 3 is a logical diagram of a network in which aspects of the present disclosure can be implemented;
Figure 4 is a block diagram of a data communications interface architecture, according to a possible embodiment of the present disclosure;
Figure 5 is a logical block diagram of a data encryption arrangement implementable within a data communication security system of a computing system, according to a possible embodiment of the present disclosure;
Figure 6 is a block diagram of a data communication security system according to a possible embodiment of the present disclosure;
Figure 7 is a block diagram of a communications interface within a data communication security system, according to a possible embodiment of the present disclosure;
Figure 8 is a block diagram of a security library useable to provide encryption according to a selected security protocol, according to a possible embodiment of the present disclosure;
Figure 9 is a flowchart illustrating use of a file-based API to select and control a security protocol useable in connection with a communication interface, according to a possible embodiment of the present disclosure;
Figure 10 is a block diagram of data flow for an outbound SSH connection request at an SSH-enabled support module, according to a possible embodiment of the present disclosure;
Figure 11 is a block diagram of data flow for an inbound SSH connection request at an SSH-enabled support module, according to a possible embodiment of the present disclosure;
Figure 12 is a flowchart illustrating formation of a channel using an SSH security protocol based on an outbound connection request, according to one specific embodiment of use of the file-based API as discussed in connection with Figure 11;
Figure 13 is a flowchart illustrating formation of a channel using an SSH security protocol based on an inbound connection request, according to one specific use of the file-based API as discussed in connection with Figure 11; and
Figure 14 is a block diagram illustrating example physical components of an electronic computing device useable to implement the various methods and systems described herein.

### Detailed Description

Various embodiments of the present invention will be described in detail with reference to the drawings, wherein like reference numerals represent like parts and assemblies throughout the several views. Reference to various embodiments does not limit the scope of the invention, which is limited only by the scope of the claims attached hereto. Additionally, any examples set forth in this specification are not intended to be limiting and merely set forth some of the many possible embodiments for the claimed invention.

The logical operations of the various embodiments of the disclosure described herein are implemented as: (1) a sequence of computer implemented steps, operations, or procedures running on a programmable circuit within a computer, and/or (2) a sequence of computer implemented steps, operations, or procedures running on a programmable circuit within a directory system, database, or compiler.

In general the present disclosure relates to methods and systems for providing security at a communication interface, such as by extending a file-based application programming interface to allow encryption settings and encryption protocols to be selected, accessed and governed within the API. In prior systems, as illustrated above, previously-encrypted data is passed to the port resource of the file-based API for communication at the interface if security was desired. The present disclosure therefore provides a straightforward method for applications to write data directly to a communication interface using that interface's file-based API (e.g., a "port file" associated with the communication interface), while allowing that communication interface that includes viewable, settable attributes related to security provided by a service available at the port. In one example discussed herein, an SSH security protocol is exposed by a file-based API, for use at a communication interface.

Similar efforts to overcome this limitation for network communications have focused on enabling a particular type of authentication and security, SSL, with a file-based API. One example of such a system is disclosed in U.S. Patent Application No. 12/636,810 filed December 14, 2009, and entitled "Secured File-Based Application Programming Interface", the disclosure of which is hereby incorporated by reference in its entirety. In the systems discussed in that related application generally focused on providing SSL/TLS encryption systems as a stand-alone security solution via a file-based API. The present application provides use of additional, flexible security and encryption systems, as well as selectability among a variety of different security protocols, including different authentication or encryption arrangements.

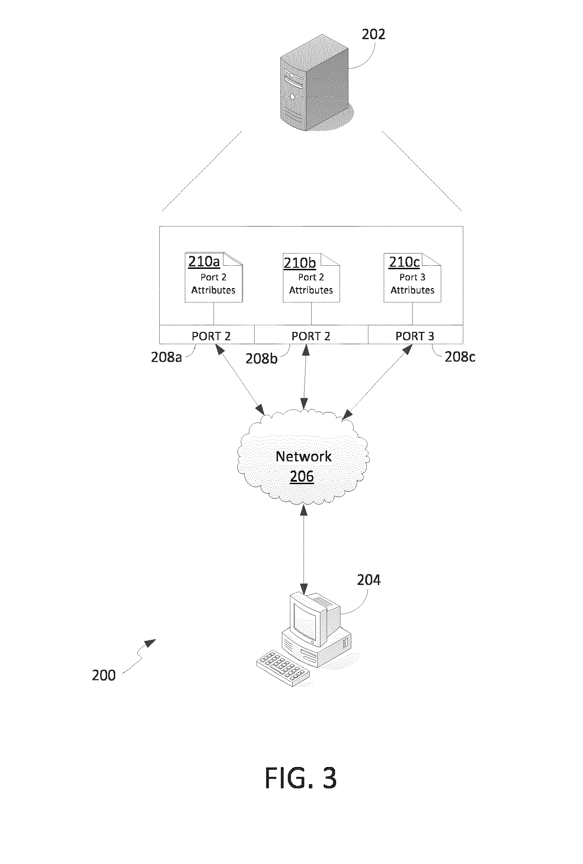

Referring now to Figure 3, a logical diagram of a network 200 is shown in which aspects of the present disclosure can be implemented. The network 200 includes a plurality of computing systems, including a server system 202 and a client system 204. The systems can be communicatively connected, for example by way of a network connection 206. The network connection can encompass any of a number of media and communications protocols, and can be, for example, one or more WAN, SAN, LAN, or other Internet-type connections.

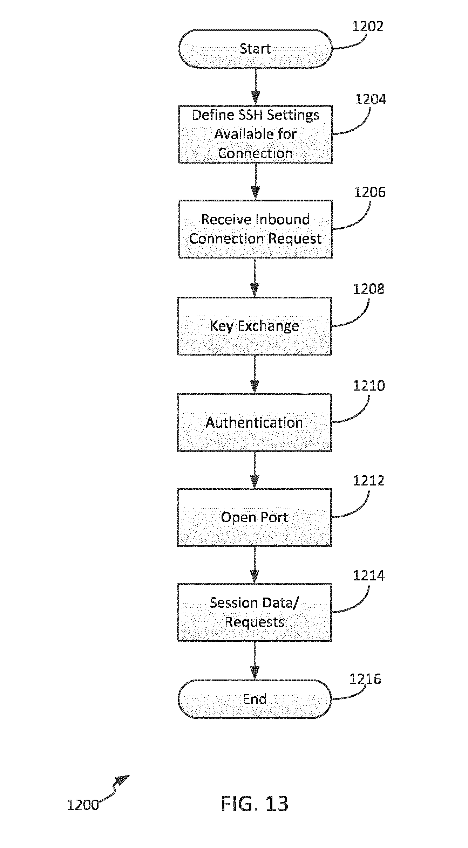

The computing systems 202, 204 can be any of a number of types of computing systems; an example of a computing system suitable within the context of the present disclosure is provided below in conjunction with Figure 13. Additionally, in the embodiment shown, server system 202 includes a plurality of individually-addressable ports 208a-c. The server system 202 can selectively activate any of the addressable portions 208a-c for data exchange using an interface for those ports.

In embodiments described herein, the server system uses a file-based programming interface to enable, disable, read, write, and set attributes for ports 208a-c. In such embodiments, a user of the server system 202 can use logical port files 210a-c to view and access various features of ports 208a-c. For example, a user can read various attributes from the files 210a-c which correspond to features of the ports; a user can also issue commands to open or close the port file, resulting in enabling/disabling of the ports. The user (e.g., application) can also read/write to the port files, which corresponds to receiving or sending data at the ports. In an example embodiment, the ClearPath MCP software provided by Unisys Corporation of Blue Bell, PA, supports use of port files for access and control of the individually-addressable ports 208a-c.

Additionally, communications between the server system 202 and the computing system 204 can be secured, for example by using one or more of a selectable set of encryption protocols. In one example, Secure Socket Layer (SSL) or Transport Layer Security (TLS) could be used, in which a certificate is provided by the server system 202 to the computing system 204 for validation (and optionally vice versa). Once security attributes, including ciphers and certificates to be used, is negotiated, encrypted communication between the systems can commence. In a second example, Secure Shell (SSH) could be used, in which a key of a public-private key pair is shared between communicating systems, and the corresponding key is held at the opposing communicating system. Other examples, providing different types of security (optionally including one or both of encryption and user authentication) could be provided as well. Once the secure communication connection is established, data can be transferred across a communicative connection using a variety of mechanisms, such as Secure Copy (SCP), SFTP, or some other type of shell protocol.

Although server system 202 is illustrated as having three communication ports 208a-c, any number of ports could be provided on any of a number of different server systems within a network, accessible to a number of different computing systems. The particular architecture of the network is largely a matter of design choice.

In certain embodiments of the present disclosure, at least one of a set of selectable security systems accessible via a file-based API includes a secure shell (SSH) security and encrypted communication scheme. The SSH security and encrypted communication scheme represents only one of a number of possible security systems that can be implemented at a communication interface within a computing system such as server system 202; therefore, the SSH systems described herein represent only a possible embodiment of one security system useable in connection with the file-based API described herein.

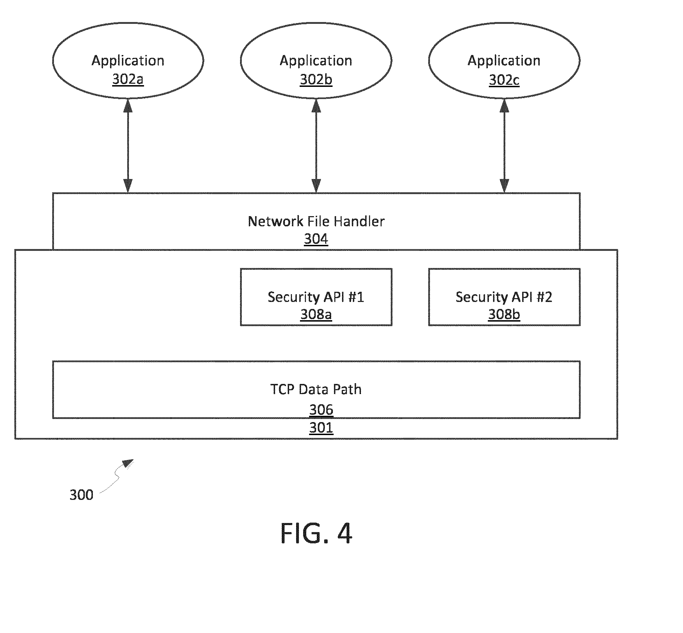

Referring now to Figure 4, an example implementation illustrating an architecture 300 of a communication interface 301 is shown, according to a possible embodiment of the present disclosure. In this embodiment, the communication interface 301 interfaces with a variety of applications, shown as applications 302a-c. In this embodiment, the communication interface 301 includes a network file handler 304 that provides access to a data path, shown as TCP data path 306. The network file handler 304 provides access to the communication interface 300 for each of the applications 302a-c, regardless of whether that application implements security via the communication interface.

Within the communication interface 301, a plurality of security modules 308a-b are provided. The security modules 308a-b implement different security protocols. For example, a first security module 308a can provide SSH-based security, while a second security module 308b can provide SSL-based security. In other embodiments, first and second security modules 308a-b can implement any of a variety of other types of security features at the communication interface 300.

As compared to the architecture 10 illustrated in Figure 1, the architecture 300 communication interface 301 exposes a single interface (the network file handler 304) to an application accessing that communication interface. As such, the application need not handle separate connections to different APIs, thereby simplifying application security implementations.

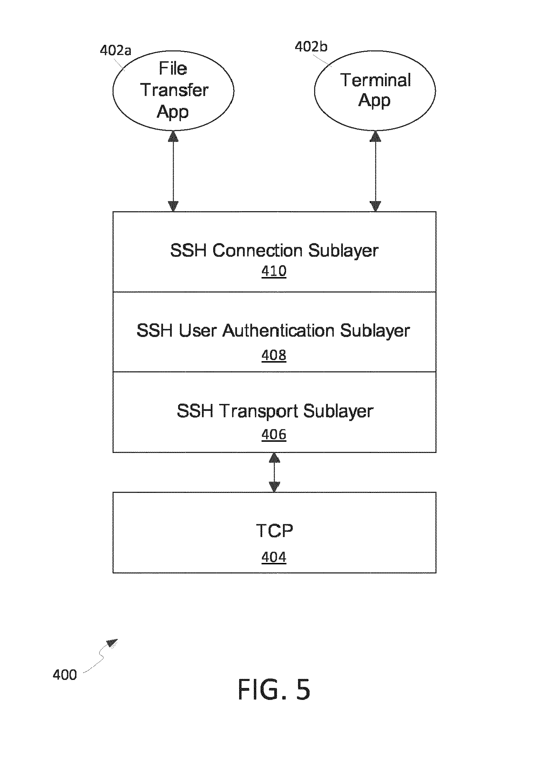

Referring now to Figure 5, an example implementation of a communication interface implementing one possible secure shell (SSH) security arrangement 400 is illustrated. The SSH security arrangement provides security for one or more applications 402a-b executing on a computing system, and resides between those applications and a transport layer protocol (shown as TCP layer 404). In the embodiment shown, the SSH security arrangement 400 includes an SSH transport layer 406, an SSH user authentication sublayer 408, and a SSH connection sublayer 410.

The SSH transport layer 406 is configured to establish a secure channel between a system implementing the SSH security arrangement 400 and a remote endpoint, such as the server system 202 and client system 204 of Figure 3, above. The SSH transport layer 406 manages negotiation of a version of the protocol to be implemented, a method of key exchange, protocol version control, as well as either public/private key or symmetric key encryption algorithms, message authentication algorithms, and hash algorithms. The SSH transport layer is also configured for authentication of a host device, such as server 104. In certain embodiments, the SSH transport layer 406 is used when the underlying TCP connection opens and SSH has been enabled on the connection. In certain embodiments, the SSH transport layer 406 is defined by the SSH protocol definition provided in RFC 4253, the disclosure of which is hereby incorporated by referenced in its entirety.

The SSH user authentication sublayer 408 is configured to provide authentication and validation of a client/user in a particular communication session. The SSH user authentication sublayer 408 is also responsible for managing authentication period timing, as well as access attempts. In certain embodiments, the SSH user authentication sublayer 408 is defined by the SSH protocol definition provided in RFC 4252, the disclosure of which is hereby incorporated by referenced in its entirety.

The SSH connection sublayer 410 establishes a channel between devices forming the SSH connection, and passes channel requests across the established channel. These channels could be interactive login sessions, remote execution of commands, forwarded TCP/IP connections, and forwarded X11 sessions. In certain embodiments, the SSH connection sublayer 410 is defined by the SSH protocol definition provided in RFC 4254, the disclosure of which is hereby incorporated by referenced in its entirety.

Although in the embodiment shown the applications 402a-b are illustrated as a file transfer application 402a and a terminal application 402b, other types of applications could access security via SSH as well.

As discussed previously, alternative security systems may be implemented differently, and may (or may not) include user authentication or data encryption. Example alternative security systems that can be exposed via a file-based API include an SSL security system, an IPsec security system, or any of a number of other security arrangements (e.g., SSTP, DTLS, or other security arrangements).

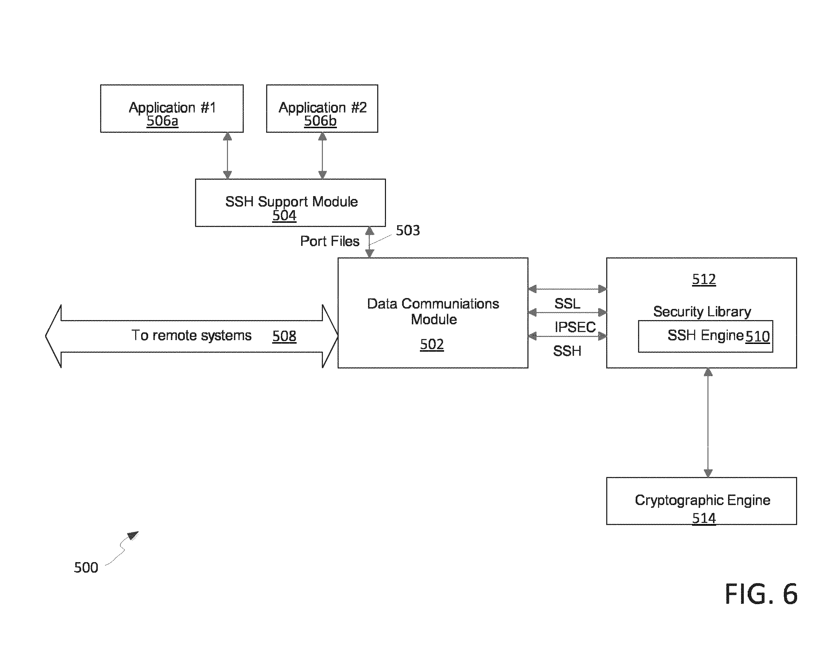

Referring now to Figure 6, a logical block diagram of a data communication system 500 in which security is implemented and exposed for use via a file-based application programming interface is illustrated. The data communication system includes a TCP communications block 502 configured to communicate between higher-level, application software (referred to individually or collectively as applications 506) and a transport layer data path 508 (e.g., a TCP layer). In the embodiment shown, the TCP communications block 502 connects to a support module 504, which provides routing of data of secured data between the communications module 502 and an associated application requesting secure communication to a remote system. In the particular embodiment shown, the support module 504 is illustrated as an SSHSUPPORT module, providing routing and management of SSH requests and associated data between a variety of applications 506a-b (e.g., telnet, FTP, or other application types) and the transport layer data path 508. In alternative embodiments, other types of applications 506 could be used as well, with the support module 504 providing multiplexing of incoming SSH-based connections to the various applications 506.

The support module 504 provides a connection library interface to support both inbound and outbound secure (e.g., SSH) connections. For these connections, TCP/IP functionality within the communications module 502 provides key exchange and user authentication services, and the support module 504 provides channel establishment and other channel handling functions.

The TCP communications block 502 and the support module 504 are connected via a port file interface 503. The port file interface publishes to the applications 506, via the support module 504, a file-based application programming interface (API) via which secured communications are provided. That is, applications accessing the TCP communications block 502 via the support module 504 do so via a port file interface, wherein writing one or more commands to a file adjusts the selected security applied to data communicated to remote systems.

The port file interface 503, which publishes the API, includes a plurality of attributes that are selectable by the applications 506.

One possible attribute specifies whether the connection or dialog between a port and a computing system accessing that port is either secure or unsecure. By modifying such an attribute, data security can be adjusted to "turn on" or "turn off" the security associated with a port for the logical I/O operations addressed to that port. Another possible attribute allows an application to select a type of security to be applied. As further discussed in connection with Figure 5 below, two or more security protocols could be implemented within the TCP communications block 502 (e.g., secure shell (SSH) or secure socket layer (SSL) security). Still other attributes could define a particular encryption cipher to use, as well as various other commands relating to one or more available types of encryption to be applied.

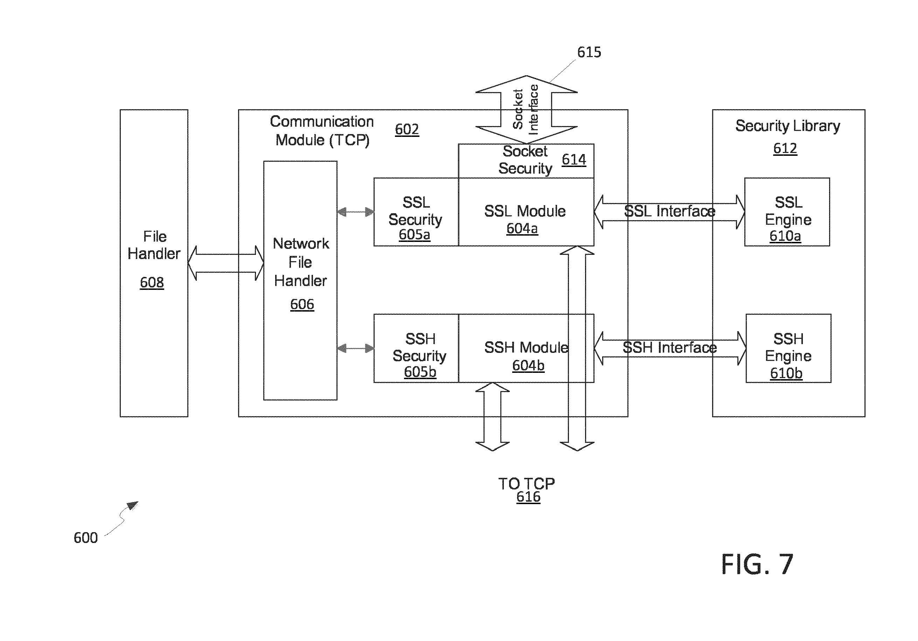

In the embodiment shown, the TCP communications block 502 includes a security module (shown in further detail in Figures 7-8 below) which can be selected by an application 506 via the port file interface 503. By selecting a security module, the application 506 can enable secured communication via the transport layer data path 508. The security module can, in certain embodiments (e.g., as illustrated in further detail below in Figures 7-8), be one of a number of security modules, by which selection of a particular type of encryption can be provided at the TCP communications block 502. As such, each application 506 need not provides its own encryption for secure communication between computing systems, but rather can leverage native encryption and security features within the communications interface.

To provide encryption, each security module is communicatively connected to a corresponding security engine 510, which provides security according to the selected security protocol as requested by an application 506. In the embodiment shown, an SSH security engine 510 is shown within a security library 512, which can maintain and manage security operations as requested for use at the TCP communications block 502. Although in the embodiment shown the security library 512 includes an SSH security engine 510, other signals communicatively connected between the TCP communications block 502 and the security library 512 can select other modules as well. For example, as further illustrated below, an SSL security engine can also be incorporated within the security library 512, as well as an IPsec security engine, or other types of security engines.

In the embodiment shown, the data communication system 500 includes a cryptographic engine 514 communicatively connected to the security library 512, and which can be used to implement one or more selected encryption algorithms. For example, in instances where one or more of the security engines 510 provide encryption of data, the cryptopgraphic engine 514 can be configured to provide one or more types of encryption algorithms used in each security protocol managed by the security engines 510. Additionally, other types of systems, for example a file system or other data resources, could be interfaced to the security library and provide resources for use within the data communication system 500 as well.

It is noted that in some embodiments, the data communication system 500 can be implemented within a hosted, or virtual, environment in which multiple operating systems execute concurrently. For example, the data communication system 500 can be implemented at least in part within the MCP operating system available from Unisys Corporation of Blue Bell, Pennsylvania, and can be hosted as a virtual computing system within a second operating system, implemented as the Windows operating system available from Microsoft Corporation of Redmond, Washington. In such embodiments, data or encryption algorithms can be provided in one or distributed across both operating systems, and data can be exchanged using one or more known message passing APIs. In alternative embodiments, other types of operating systems, APIs, or communication systems could be interfaced to the TCP communications block 502, support module 504, and/or security library 512 as well.

In one particular example embodiment in which secure data communication requires storage and/or management of data encryption keys and/or authentication credentials, a security manager (not shown) can be integrated into the data communication system 500, and can be used to create key containers, handle event logging, and management of authorization mechanisms (e.g., authorization by password, authorization by use of a public key of a public/private key pair, or a combination of the two authorization mechanisms). The security manager can provide various other security data management, and could be linked to the TCP communications block 502 and/or security library 512. Other arrangements are possible as well.

Referring now to Figures 7-8, additional details regarding an example implementation of a data communications interface 600 including a communication module 602, such as TCP communications block 502, are illustrated. In the example implementation of Figures 7-8, a data communication interface 600 includes a communication module 602, which includes first and second security modules 604a-b. The first and second security modules 604a-b each include a file-based security interface 605a-b used to communicatively connect to a network file handler 606, which allows selection of an available security module (e.g., from among the first and second security modules 604a-b for use via file-based API.

As compared to the SSH-specific arrangement discussed above in connection with Figures 5-6, the embodiments discussed in connection with Figures 7-8 might or might not include an implementation of SSH security, but in any event include selectable security features published to applications via the a file-based API. The embodiments discussed herein relate particularly to a file-based API that exposes control over a plurality of security systems implementing different security protocols. This allows client applications to use the security features incorporated into the communication interface, rather than requiring each application to individually implement its own selected security protocol, or dictating that all applications use a common system security protocol.

In the embodiment shown, the network file handler 606 receives data from a file handler 608 external to the communication module 602, and routes requests or commands received via the file-based API to an appropriate security module. In the embodiment shown, the first security module 604a provides access to a secure shell (SSH) security system, and the second security module 604b provides access to a secure socket layer (SSL) security system. In alternative embodiments, other security systems could be added to or used in place of the SSH and SSL systems, in association with additional or differently configured security modules.

In the embodiment shown, the security modules 604a-b are each divided into two "halves" - one half that deals with the secured data, and one that deals with the "user" (either the proprietary or logical I/O user). This provides an advantage by allowing the security module code to be more generic and remove the proprietary API code from the core security module (e.g., for SSH or SSL security). This design also abstracts the protocol engine out of the API (so that it can be specified), enabling additional protocol engines to be developed.

To provide encryption of data using the selected security module 604, each of the security modules 604a-b are interconnected to a corresponding encryption engine 610 positioned within a security library 612. In the embodiment shown, the first security module 604a is associated with and communicatively connected to a first encryption engine 610a configured to manage SSL encryption protocols, while the second security module 604b is associated with and communicatively connected to a second encryption engine 610b configured to manage SSH encryption protocols. Each of the first and second encryption engines 610 can be interconnected to a cryptography engine (e.g., as illustrated in Figure 6, above), which can be used to enforce a particular encryption cipher (e.g., using any of a variety of cipher suites known in the art, such as RSA/SHA/AES) to be used in connection with the selected protocol (e.g., SSL, SSH, etc.). Other configurations are possible as well, for example in which data is passed from the encryption engines 610a-b to the cryptography engines for encryption and then returned to the communication module 602.

In the embodiment shown, each of the security modules 604a-b communicatively connect to a TCP layer 616, and provide selected encryption for data to be communicated via the TCP layer 616. The second security module 604b is illustrated as communicatively connected to an alternative, direct socket-based interface 612 via a socket security module 614, allowing for direct socket-based connection to a SSL-secured connection to the TCP layer 616 using a socket interface 615, rather than a file-based API. In this embodiment, use of either SSH or SSL security can be selected based on receiving an indication from an application at the network file handler 606 setting one or more of a plurality of attributes of the data communication module exposed by the file-based application programming interface, or from a remote system. Example attributes include, for example: an attribute indicating whether to use secured or unsecured communication at the data communication module; and an attribute defining an encryption protocol to be used (i.e., a particular security module to use, such as the SSH-based and SSL-based security modules 604a-b described above). Other attributes, such as attributes associated specifically with the type of encryption selected, could be used as well (examples of which are discussed in further detail below).

In use, the communication module 602 is configured to receive requests from the file handler 608 at the network file handler 606. The requests can be received, for example, via the file-based API explained above. The requests can, in certain embodiments, represent inbound requests for secured or unsecured communication using the data communication interface 600. A variety of possible requests could be included, for example requests to set one or more of the attributes exposed by the file-based API and available via the network file handler 606 and associated security modules 604a-b. For example, requests could relate to opening a channel or closing a channel, data communications generally, or identifying a particular security protocol to be used (e.g., SSH, SSL/TLS, or other security system) by selection of a particular security module).

In use, the data communication interface 600 can be implemented using a variety of separably instantiated objects, which can be selectively used depending upon whether a particular security protocol is selected. For example, a first object used to support general data communications could transmit a session handle to another object associated with a particular security protocol if that protocol is identified using the file-based API. Additionally, links could be created between the general data communications object and a security architecture to allow the general data communications object to track a status of the security (e.g., active vs. inactive) of data communicated via the data communication interface 600. It is recognized that various implementations of objects could be used to implement security within the data communication interface 600, in various embodiments of the present disclosure.

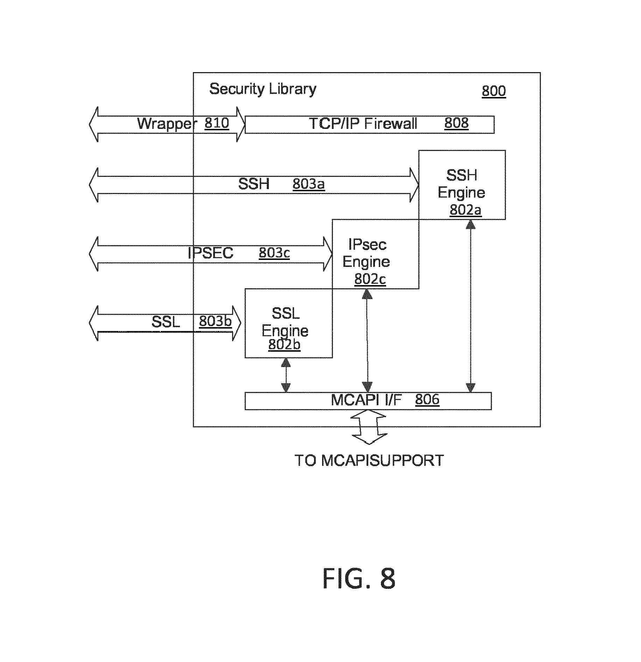

Referring now to Figure 8 , details of a security library are illustrated, according to a possible embodiment of the present disclosure. Figure 8 is a block diagram of a security library 800 useable to provide security according to a selected security protocol, and can, in certain embodiments, represent security libraries 512, 612 discussed above with respect to Figures 6-7. The security library 800 includes a plurality of encryption engines 802, illustrated in the embodiment shown as including a SSH security engine 802a, an SSL security engine 802b, and an IPsec security engine 802c. In alternative embodiments, more or fewer security engines could be included within the security library 800, or the existing security engines 802 could be implemented using different security protocols.

Each of the security engines 802a-c has an associated selection and data connection 803a-c leading to a communication module (e.g., TCP communications block 502, or module 602 of Figures 6-7, above) with which a security module can be used to select and communicate data between the selected security engine 802 and a transport layer. Each of the security engines 802 can also include a communicative connection to a messaging API interface 806, which communicates with one or more cryptographic engines configured to perform the various encryption algorithms selected for use within the selected security protocol (e.g., cryptographic engine 514 of Figure 6). In the embodiment shown, the messaging API interface 806 is illustrated using MCAPI, other APIs are useable as well.

In addition to the security engines 802, the security library 800 includes a firewall 808 which can be interfaced with a communication module using a wrapper interface 810. The combination of the firewall 808 and various security engines 802 allows the security library to include and expose the functionality of a number of different types of data security to the overall data communications system and any computing system in which it is implemented.

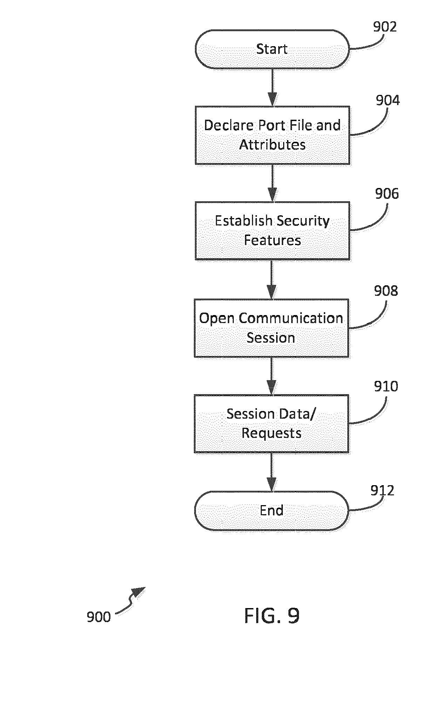

Referring now to Figure 9, a flowchart is shown representing a method 900 for using a file-based API to select and control a security protocol useable in connection with a communication interface, according to a possible embodiment of the present disclosure. The method 900 can be performed, for example, by an application wishing to implement one of the available, published security protocols published by the file-based API, such as the SSH, SSL/TLS, or IPsec protocols discussed herein, or other security protocols that may be made available via the API.

The method 900 is instantiated at a start operation 902, which generally corresponds to initial access of a communication interface via a file-based API. This may occur, for example, by accessing a particular port file that exposes the API to a consumer of the security features provided by the API (e.g., an application intending to communicate securely via the communication interface).

A declaration operation 904 declares one or more port file attributes. The declaration operation 904 can occur within the security system generally in response to either an inbound request to open a secured connection, or an outbound request to establish such a connection. The one or more port file attributes include attributes available via the port file, which represents an implementation of the file-based API. Example attributes can include, for example, an attribute defining whether or not security is desired, an attribute defining a type of security to be applied (if security is desired), an attribute associated with key exchange or authentication (if applicable), or an attributed relating to encryption types being used (again if applicable).

A security operation 906 enables security features that are implicated for use by the connection to be established. The security operation 906 occurs if the user selects to enable security using an attribute associated with the port file. The security operation 906 can also perform any precursor tasks that may be required to establish a secure connection at the communication interface. For example, in some embodiments (and depending on the type of security selected), the security operation 906 may include exchange of keys, negotiation of an authentication policy to be used, negotiation of encryption to be used, or other features.

Once security is established (if applicable), a communication session operation 908 opens a communication session that applies the selected settings. The communication session operation 908 can be instantiated using commands written to the port file, for example to open a data connection, or to send/receive data. Data operations 910 can then be performed, transmitting and receiving data using the secured connection, according to the attributes set via the port file API. An end operation 912 corresponds to completion of data operation 910, and closing the communication session.

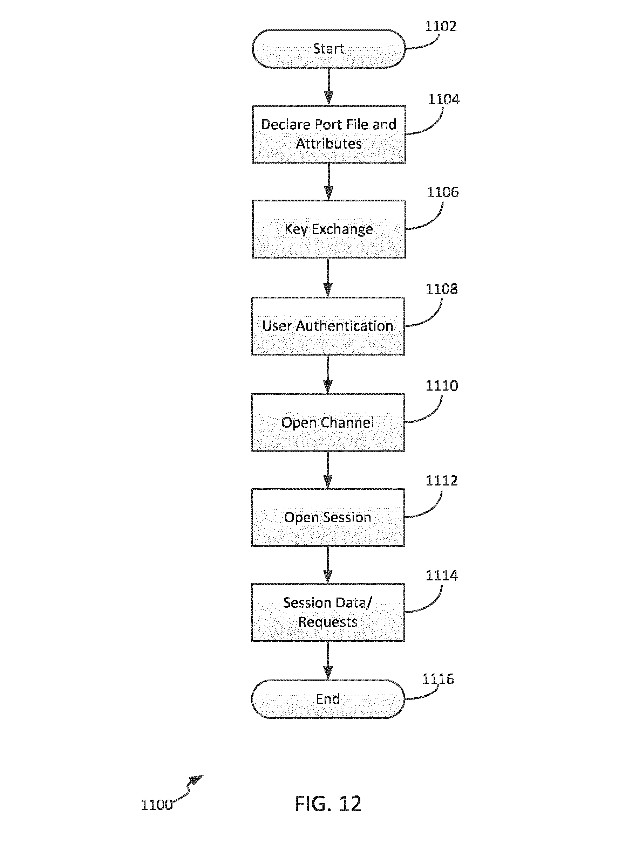

In various embodiments, the operations disclosed above may be varied, or executed out of order. For example, one or more security attributes may be edited after a communication session is opened, for example changing an authentication password or exchange of updated encryption keys. Additionally, other operations could be included as well. Some examples of using such a port file API are discussed below in connection with Figures 12-13, which describe establishing an SSH-secured connection. Other examples are possible as well, implementing other security protocols. Therefore, the above examples are intended as exemplary, rather than limiting.

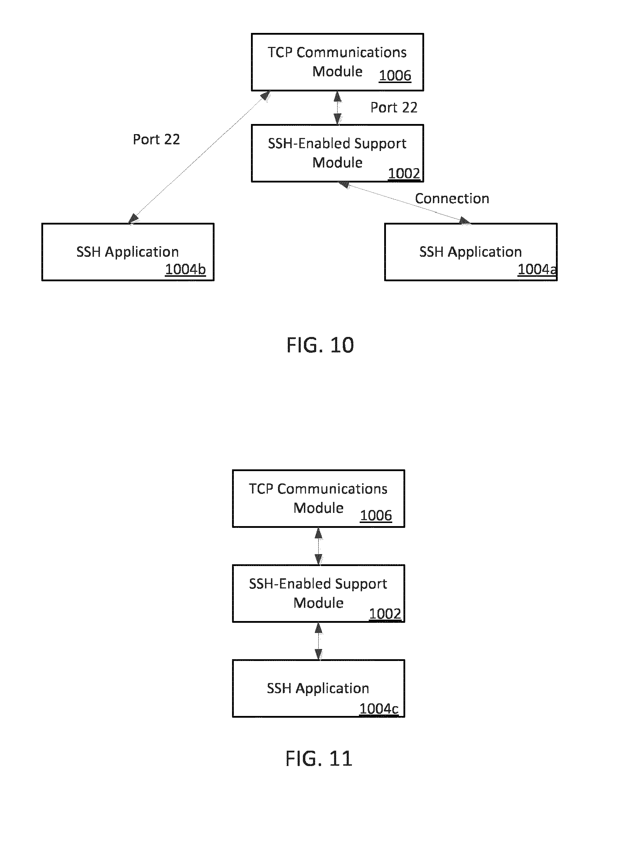

Referring now to Figures 10-13, details regarding use of a support module within a data communication security system are provided, in particular relating to use of an SSH-based support module in a system exposing SSH security via a file-based API. The support module can be used to manage requests and communication between a communications module (e.g., TCP communications block 502 of Figure 6) which may provide a TCP communications interface to a transport layer, and applications requesting security via a file-based API. In certain embodiments, the support module can be the SSH-enabled support module 504 of Figure 6. As further discussed below, Figures 10-11 are block diagrams of example data flows occurring when inbound and outbound SSH connections are established using an SSH-enabled support module, such as support module 504 of Figure 6. Figures 12-13 are flowcharts illustrating methods for establishing secured inbound and outbound connections in an example implementation including SSH security.

In the context of the present disclosure, an inbound request refers to a circumstance where a secure connection is established in response to receipt of a request at the transport layer from a remote computing system, and an outbound request refers to a circumstance where a secure connection is established in response to a request received from an application at the local computing system, and in which a secure connection to a remote system is to be requested. Although in the embodiments discussed in Figures 10-13 security is provided by use of an SSH-enabled connection, other types of security protocols could be used as well, and made available to local applications by way of a file-based API.

In the embodiment shown in Figure 10, an outbound SSH connection request is received at a support module 1002 from an SSH-enabled application 1004a. In some embodiments in which the computing system within which the data communication security system resides acts as a client system, that system will send outbound SSH session initiation requests. In such embodiments, the SSH support module 1002 opens a remote TCP port, for example port 22. The SSH support module 1002 can transmit this open port request via a file-based API providing it access to a TCP communications module 1006, which it accesses via a port file interface. The corresponding receiving system will be configured to listen for SSH session requests on the corresponding port (e.g., port 22).

In alternative embodiments, outbound SSH connections can also be established directly by an application 1004b, using a port file with a TCP port number 22. For these connections, the data communications module 1006 provides key exchange and user authentication services, leaving the application 1004b responsible for channel establishment and other channel handling otherwise supported by the SSH-enabled support module 1002. The support module 1002 is not required in such connections.

In Figure 11, a block diagram of data flow for an inbound SSH connection request at an SSH-enabled support module is shown. In this arrangement, the TCP communications module 1006 offers an authenticated port (e.g., port 22) at which it listens for SSH connection requests. The support module 1002 determines the status of the port and performs any necessary processing, such as initiating the channel provider (for channel establishment), or forwarding the request (for channel requests). A connection library interface handles channel requests received that are related to an application (e.g.., application 1004c) accessible via the support module 1002.

In comparison to Figure 10, inbound connection requests are all routed, in this embodiment, to the support module 1002, which provides channel handling and multiplexing of data to local applications, such as FTP, telnet, or other applications to be used via the secure connection sought to be established. In contrast, for outbound connections, the support module 1002 may or may not be used, depending upon the capabilities of the particular application requesting the secure (e.g., SSH-based) connection.

Referring now to Figures 12-13, methods for forming a secure channel using the SSH security protocol are described for both inbound and outbound connections. Figure 12 illustrates a method 1100 performed to form an SSH-secured channel based on an outbound connection request, while Figure 13 illustrates a method 1200 performed to form an SSH-secured channel based on an inbound connection request. The methods described in Figures 12-13 are executable on a computing system implementing a data communication security system analogous to the various embodiments described herein.

Referring now to Figure 12, a method 1100 is shown, illustrating operations occurring when an outbound data request is received from an application a support module (e.g., SSH-enabled support module 1002) opens a port, such as port number 22, for secure communication. A start operation (step 1102) corresponds to initial operation of the data communication security system, and availability of a particular remote system for formation of an SSH session between the computing systems using a file-based API as discussed above. The calling application defines a particular type of channel to be opened, and the support module sets one or more attributes defining the type of channel in response to that definition. In certain embodiments, the support module defines the encryption protocol to be used (e.g., SSH), a key container to be used, a manner of authentication (e.g., use of a public key or password, or combination thereof), and other attributes defining the encryption protocol, such as the key exchange algorithm, the encryption algorithm, and host key algorithm to be used. Once attributes are set, the connection state is set to await authentication (step 1104).

After attributes are set by the support module, a data communications module (e.g., a TCP/IP module, such as TCP communications block 502 of Figure 6) will manage exchange of keys to be used (step 1106). The particular key exchange algorithm may vary in different embodiments of the present disclosure. In some embodiments, use of public/private keys, symmetric keys, host key, or other arrangements could be used.

A user authentication operation (step 1108) is then performed in either a data communications module or related support module. Once authenticated, a support module creates a communications channel by sending a channel open request (step 1110) and receiving a return confirmation from the computing system receiving the request. Following step 1110, the connection is considered to be open, and a channel request can be sent to initiate a communication session (step 1112).

Once confirmation of the session is received, one or more additional requests can be transmitted to the receiving computing system (step 1114), depending upon the particular type of channel requested for use during the session. Example types of channels able to be requested within an SSH-enabled session include, in various embodiments, a shell, a command execution, or a subsystem request. Other types of requests could be used as well.

In method 1200 of Figure 13, a start operation (step 1202) corresponds to initial availability of a computing system to receive inbound SSH connections. In the embodiment shown, attributes of the secured connection are communicated from an SSH-enabled support module to a data communication module, to identify to that module the settings supported for SSH connections (step 1204). The attributes can include, for example, those identified above, including the encryption protocol to be used (e.g., SSH), a key container to be used, a manner of authentication (e.g., use of a public key or password, or combination thereof), and other attributes defining the encryption protocol, such as the key exchange algorithm, the encryption algorithm, and host key algorithm to be used.

An inbound connection request is received from a remote system at a predetermined communication port of a communication interface (step 1206). The communication port can be, for example, port 22, on which secure communication requests are monitored by a communications module. A key exchange process (step 1208) occurs, in which keys used for encryption of data in the SSH-enabled session are exchanged, and server authentication is performed. The remote system is then authenticated locally, using either a key or username/password combination (e.g., within a security manager) (step 1210).

Once authenticated, the local system will open a port using a support module (step 1212). For example, an SSH-enabled support module can receive a channel request, and can confirm that a channel is open by providing responsive service to the remote system (step 1214). Various types of channel requests, such as the shell, command execution, terminal or other subsystem requests could be received and managed. Additionally, data can be received via the open port. End operation (step 1216) signifies completed formation of an SSH connection based on an inbound request.

Referring to Figures 2-13 generally, using the above-described systems and interfaces, it can be seen that a number of advantages result from exposing port-specific security features to be visible to applications using a file-based API. For example, the file-based API allows simple programming adjustments by application developers to quickly incorporate security into server and client-side systems, while also allowing extensibility to customize both the level of security provided (e.g., by adjusting the cipher or key used, or by adjusting the type of encryption enabled, e.g. from implicit to explicit security) as well as the type of security enabled (e.g., by allowing selection from among a plurality of security systems, such as SSH, SSL/TLS, etc.). The specific security operations are also separated from the applications accessing a communication port due to abstraction at the file-based API, thereby making the encryption and decryption of logical I/O operations opaque to and removed from those applications issuing I/O operation commands.

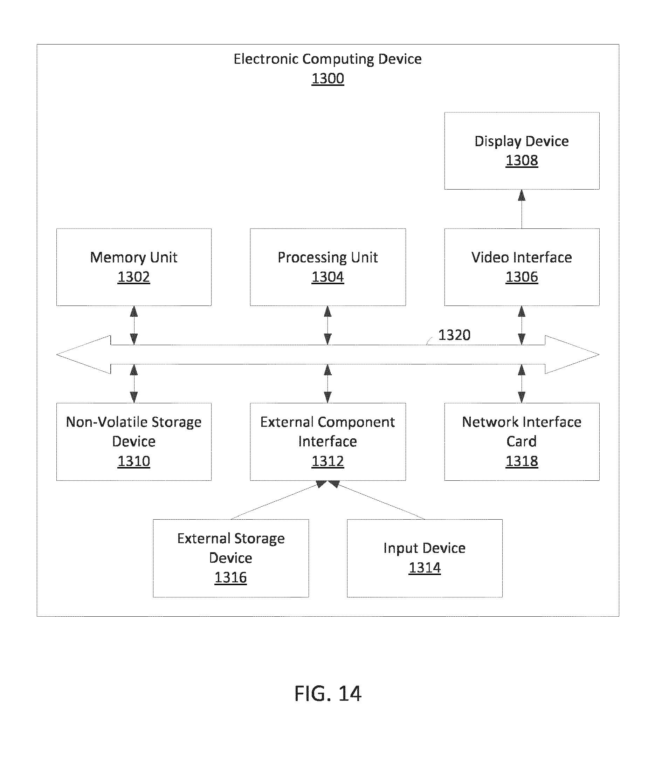

Figure 14 is a block diagram illustrating example physical components of an electronic computing device 1300, which can be used to execute the various operations described above. A computing device, such as electronic computing device 1300, typically includes at least some form of computer-readable media. Computer readable media can be any available media that can be accessed by the electronic computing device 1300. By way of example, and not limitation, computer-readable media might comprise computer storage media and communication media.

As illustrated in the example of Figure 14, electronic computing device 1300 comprises a memory unit 1302. Memory unit 1302 is a computer-readable data storage medium capable of storing data and/or instructions. Memory unit 1302 may be a variety of different types of computer-readable storage media including, but not limited to, dynamic random access memory (DRAM), double data rate synchronous dynamic random access memory (DDR SDRAM), reduced latency DRAM, DDR2 SDRAM, DDR3 SDRAM, Rambus RAM, or other types of computer-readable storage media.

In addition, electronic computing device 1300 comprises a processing unit 1304. As mentioned above, a processing unit is a set of one or more physical electronic integrated circuits that are capable of executing instructions. In a first example, processing unit 1304 may execute software instructions that cause electronic computing device 1300 to provide specific functionality. In this first example, processing unit 1304 may be implemented as one or more processing cores and/or as one or more separate microprocessors. For instance, in this first example, processing unit 1304 may be implemented as one or more Intel Core 2 microprocessors. Processing unit 1304 may be capable of executing instructions in an instruction set, such as the x86 instruction set, the POWER instruction set, a RISC instruction set, the SPARC instruction set, the IA-64 instruction set, the MIPS instruction set, or another instruction set. In a second example, processing unit 1304 may be implemented as an ASIC that provides specific functionality. In a third example, processing unit 1304 may provide specific functionality by using an ASIC and by executing software instructions.

Electronic computing device 1300 also comprises a video interface 1306. Video interface 1306 enables electronic computing device 1300 to output video information to a display device 1308. Display device 1308 may be a variety of different types of display devices. For instance, display device 1308 may be a cathode-ray tube display, an LCD display panel, a plasma screen display panel, a touch-sensitive display panel, a LED array, or another type of display device.

In addition, electronic computing device 1300 includes a non-volatile storage device 1310. Non-volatile storage device 1310 is a computer-readable data storage medium that is capable of storing data and/or instructions. Non-volatile storage device 1310 may be a variety of different types of non-volatile storage devices. For example, non-volatile storage device 1310 may be one or more hard disk drives, magnetic tape drives, CD-ROM drives, DVD-ROM drives, Blu-Ray disc drives, or other types of non-volatile storage devices.

Electronic computing device 1300 also includes an external component interface 1312 that enables electronic computing device 1300 to communicate with external components. As illustrated in the example of Figure 13, external component interface 1312 enables electronic computing device 1300 to communicate with an input device 1314 and an external storage device 1316. In one implementation of electronic computing device 1300, external component interface 1312 is a Universal Serial Bus (USB) interface. In other implementations of electronic computing device 1300, electronic computing device 1300 may include another type of interface that enables electronic computing device 1300 to communicate with input devices and/or output devices. For instance, electronic computing device 1300 may include a PS/2 interface. Input device 1314 may be a variety of different types of devices including, but not limited to, keyboards, mice, trackballs, stylus input devices, touch pads, touch-sensitive display screens, or other types of input devices. External storage device 1316 may be a variety of different types of computer-readable data storage media including magnetic tape, flash memory modules, magnetic disk drives, optical disc drives, and other computer-readable data storage media.

In the context of the electronic computing device 1300, computer storage media includes volatile and nonvolatile, removable and non-removable media implemented in any method or technology for storage of information such as computer readable instructions, data structures, program modules or other data. Computer storage media includes, but is not limited to, various memory technologies listed above regarding memory unit 1302, non-volatile storage device 1310, or external storage device 1316, as well as other RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium that can be used to store the desired information and that can be accessed by the electronic computing device 1300.

In addition, electronic computing device 1300 includes a network interface card 1318 that enables electronic computing device 1300 to send data to and receive data from an electronic communication network. Network interface card 1318 may be a variety of different types of network interface. For example, network interface card 1318 may be an Ethernet interface, a token-ring network interface, a fiber optic network interface, a wireless network interface (e.g., WiFi, WiMax, etc.), or another type of network interface.

Electronic computing device 1300 also includes a communications medium 1320. Communications medium 1320 facilitates communication among the various components of electronic computing device 1300. Communications medium 1320 may comprise one or more different types of communications media including, but not limited to, a PCI bus, a PCI Express bus, an accelerated graphics port (AGP) bus, an Infiniband interconnect, a serial Advanced Technology Attachment (ATA) interconnect, a parallel ATA interconnect, a Fiber Channel interconnect, a USB bus, a Small Computer System Interface (SCSI) interface, or another type of communications medium.

Communication media, such as communications medium 1320, typically embodies computer-readable instructions, data structures, program modules or other data in a modulated data signal such as a carrier wave or other transport mechanism and includes any information delivery media. The term "modulated data signal" refers to a signal that has one or more of its characteristics set or changed in such a manner as to encode information in the signal. By way of example, and not limitation, communication media includes wired media such as a wired network or direct-wired connection, and wireless media such as acoustic, RF, infrared, and other wireless media. Combinations of any of the above should also be included within the scope of computer-readable media. Computer-readable media may also be referred to as computer program product.

Electronic computing device 1300 includes several computer-readable data storage media (i.e., memory unit 1302, non-volatile storage device 1310, and external storage device 1316). Together, these computer-readable storage media may constitute a single data storage system. As discussed above, a data storage system is a set of one or more computer-readable data storage mediums. This data storage system may store instructions executable by processing unit 1304. Activities described in the above description may result from the execution of the instructions stored on this data storage system. Thus, when this description says that a particular logical module performs a particular activity, such a statement may be interpreted to mean that instructions of the logical module, when executed by processing unit 1304, cause electronic computing device 1300 to perform the activity. In other words, when this description says that a particular logical module performs a particular activity, a reader may interpret such a statement to mean that the instructions configure electronic computing device 1300 such that electronic computing device 1300 performs the particular activity.

One of ordinary skill in the art will recognize that additional components, peripheral devices, communications interconnections and similar additional functionality may also be included within the electronic computing device 1300 without departing from the spirit and scope of the present invention as recited within the attached claims. Furthermore, the above specification, examples and data provide a complete description of the manufacture and use of the composition of the invention. Since many embodiments of the invention can be made without departing from the spirit and scope of the invention, the invention resides in the claims hereinafter appended.

## Claims

1. A data communication security system comprising:
a network interface including:
a first security module implementing a first security architecture;
a second security module implementing a second security architecture different from the first security architecture;
a file-based application programming interface defining a plurality of attributes of the network interface and including at least one attribute associated with data security managed by one of the first and second security modules,
wherein at least one attribute from among the plurality of attributes associated with selecting between the first or second security modules.

2. The data communication security system of claim 1, wherein the file-based application programming interface is accessible for use in logical I/O operations by one or more application level software modules.

3. The data communication security system of claim 1 or 2, wherein the first security module provides secure shell (SSH) based encryption of data.

4. The data communication security system of claim 3, wherein the network interface is configured to route inbound secure connection requests to a support module.

5. The data communication security system of claim 3, wherein the second security module provides secure socket layer (SSL) based encryption of data.

6. The data communication security system of any preceding claim, wherein the at least one attribute associated with data security specifies that the connection be secure or unsecure.

7. The data communication security system of any preceding claim, wherein the first security module is communicatively connected to a first security engine, the first security engine configured to secure data according to the first security architecture.

8. The data communication security system of claim 7, wherein the second security module is communicatively connected to a second security engine, the second encryption engine configured to secure data according to the second security architecture.

9. The data communication security system of claim 8, wherein the first and second security engines reside within a security library.

10. The data communication security system of claim 9, further comprising a third security engine within the security library, the third security engine implementing IPsec security.

11. The data communication security system of any preceding claim, wherein the network interface is configured for transport layer communications at a communication port.

12. The data communication security system of any preceding claim, wherein at least one of the first security engine and the second security engine is communicatively connected to a transport layer data path.

13. A method of securing data at a communication interface of a computing system, the method comprising:
receiving a command at the communication interface to open a channel with a remote computing system, the command included in a file-based application programming interface defining a plurality of attributes of the communication interface, and wherein at least one attribute from among the plurality of attributes defines a security protocol to be used, the security protocol selected from among a plurality of available security protocols;
setting at least one attribute associated with data security or data encryption at the communication port, the at least one attribute used to select from among the plurality of available security protocols; and
transmitting a request to open the channel to the remote computing system from which the open command was received.

14. The method of claim 13, further comprising issuing a write command to the file-based application programming interface, whereby data associated with the write command is secured within a security engine selected based on the at least one attribute and transmitted on the channel.

15. The method of claim 14, wherein the write command is written to a port file implementing the file-based application programming interface.

16. The method of any one of claims 13 to 15, wherein the at least one attribute selects from among a group of security protocols consisting of:
a secure shell (SSH) security protocol; and a secure socket layer (SSL) security protocol.

17. The method of any one of claims 13 to 16, further comprising setting at least one attribute that specifies that the connection be secure or unsecure, and/or setting at least one attribute defining an acceptable method of user authentication, and/or setting at least one attribute defining an encryption algorithm to be used by the security protocol.

18. The method of claim 17, wherein the acceptable method of user authentication is selected from the group consisting of:
public key authentication; password authentication; and
combined public key and password authentication.

19. The method of any one of claims 13 to 18, wherein receiving the open command at the communication interface includes receiving the open command at a predetermined communication port associated with the communication interface.
